# EUROPEAN PATENT SPECIFICATION

(11) **EP 1 473 140 B1**
(45) Date of publication and mention of the grant of the patent: **14.07.2010**
(21) Application number: 04076336.9
(22) Date of filing: 03.05.2004
(51) Int. Cl.: B29C 51/30, B29C 33/38, B23P 15/24

(54) **Thermoforming tool, cutting nipple and form cutting nipple**
Formwerkzeug zum Warmformen, Schneidewerkzeug und in Formkavität integriertes Schneidewerkzeug
Appareil pour le façonnage par thermoformage, outil de découpe, outil de découpe intégré à l'empreinte

(30) Priority: 02.05.2003 NL 1023329; 09.07.2003 NL 1023869
(43) Date of publication of application: 03.11.2004
(73) Proprietor: Anbeco B.V., 5161 EG Sprang-Capelle (NL)
(72) Inventor: Van Tilborgh, Hendrik Cornelis, 5176 ND De Moer (NL)
(74) Representative: Tabeling, Marcella M.J.

(56) References cited:
- EP-A2- 1 398 134
- DE-A- 10 022 114
- DE-A1- 4 326 190
- DE-B- 1 166 455
- DE-C1- 3 405 156
- DE-U- 29 605 249
- DE-U1- 9 421 923
- DE-U1- 29 814 481
- US-A- 2 282 423
- US-A- 2 891 280
- US-A- 5 031 483
- US-A- 5 573 617
- US-A- 5 890 402
- HORST KUCHLING: "Taschenbuch der Physik" 1985, VERLAG HARI DEUTSCH , THUN UND FRANKFURT/MAIN

## Description

The invention relates to a thermoforming tool for thermoforming a plastic sheet into a number of products according to the preamble of claim 1, a form cutting nipple according to the preamble of claim 5, as well as a cutting nipple according to the preamble of claim 6.

Such thermoforming tools are used to form hollow products from a plastic sheet, such as cups, trays or covers which are used for instance as packaging for dairy products.

A heated plastic sheet is here placed between a lower mould and an upper mould which are then moved onto each other. In the lower mould are arranged cavities, and the heated plastic is usually moved into the cavities arranged in the lower mould by means of plugs movable out of the upper mould. Air is then admitted from the upper mould which presses the plastic, preformed by the plugs, against the wall of the cavities. The plastic herein acquires its desired form. The walls of the cavities are cooled, whereby the plastic becomes solid. The edges of the material between the two moulds is subsequently cut through in order to separate the products. The products are then ejected.

The walls of the cavities of the lower mould are formed by forming inserts. These forming inserts are cooled in order to accelerate the cooling process, either directly if the forming inserts are provided with cooling channels, or indirectly when the inserts are thermally coupled to cooled components.

On their top side the forming inserts are provided with a cutting edge or cutting nipple. These are used to cut the formed products out of the original flat sheet.

Apart from this cutting, the cutting edge or cutting nipple must also transport some of the thermal energy from the solidifying plastic. The material has after all been heated over its whole surface to enable deforming thereof. The material must be cooled before the formed product can be transported in a correct manner. For this purpose the heat released during cooling must be transported.

During the cooling process the cutting edge is in contact with the plastic sheet. This latter is relatively thick at this position since it is not stretched during the deformation.

The cutting edge must therefore satisfy two requirements, i.e. be manufactured from a hard, wear-resistant material to enable cutting, and be manufactured from a good thermally conducting material to enable efficient transport of the heat released during cooling. No materials are known up to the present which satisfy both requirements.

It is noted here that it is of the greatest importance for the capacity of such a device that the cooling is as effective as possible. By selecting a material with optimum cooling properties the time duration required for cooling can be shortened considerably. This has a great influence on the cycle time, and thereby on the output of the machine in which the thermoforming tool is used.

The thermoforming tool according to the preamble of claim 1, as well as the form cutting nipple according to the preamble of claim 5, and the cutting nipple according to the preamble of claim 6 is known from DE-U-296 05 249. Proposed herein is a thermoforming tool for thermoforming a plastic sheet into a number of products, wherein the thermoforming tool comprises a number of components which, during the operation of the thermoforming tool, come into contact with the plastic sheet and through which runs a thermal energy flow, and wherein at least one of these components is formed by cutting nipple consisting of a cooling insert and a cutting element. The cutting element is bolted to the lower mould.

Despite this measure the thermal behaviour of this prior art thermoforming tool is not optimal.

The object of the invention is to provide a thermoforming tool wherein the thermal behaviour is improved.

By mutually connecting the two parts, the connection between the two parts becomes more firm so that seam or gap between the two parts is made as small as possible, whereby the thermal resistance is bridged.

This object is achieved by the features of any of the independent claims 1, 5, and 6.

It is otherwise pointed out that wear-resistant materials are understood to mean all materials which are suitable for serving as cutting member and which therefore have a certain hardness, and all materials which are sufficiently smooth or low-friction that they can move with minimal friction along another element.

It is noted here that a skilled person, in view of the small tolerance necessary in this type of thermoforming tool and the temperature ranges through which these thermoforming tools pass, will tend to avoid combinations of different materials because of different coefficients of thermal expansion.

It is possible in the first instance to make use of a releasable connection between the two parts, such as a bolt, rivetted or shrink connection. In this embodiment the parts can be separated for the purpose of exchange after for instance wear or damage.

It is however most recommended to connect the parts non-releasably to each other. It hereby becomes possible to opt for a connecting technique wherein not only is the gap wholly avoided but wherein a molecular connection is also present between the two parts.

In an embodiment now deemed the most attractive, the two parts are mutually connected by soldering or welding, since any form of gap is hereby avoided. An firm connection between the two parts is moreover created which conducts the heat flow well.

According to another embodiment, the two parts are mutually connected by glueing. Here the material of the glue will generally have a high thermal resistance, but this can be at least partly compensated by the use of a filler with low thermal resistance, such as a metal. An advantage of applying glue is that high temperatures are not necessary to bring about the connection as in soldering or welding. With glueing there is hereby a wider choice of materials for both parts because materials can also be chosen which cannot withstand the relatively high temperatures occurring in welding or soldering.

Components which are assembled from combinations of more than two parts likewise fall within the invention.

The invention will be elucidated hereinbelow with reference to the annexed drawings, in which
- Figure 1A: shows a cross-sectional view of a detail of a thermoforming tool according to the invention;
- Figure 1B: shows a detail of figure 1A;
- Figure 2: is a oross-sectional view of the form cutting nipple shown in figures 1A and 1B;
- Figure 5: is a cross-sectional view of a cutting nipple which forms not part of the invention;
- Figure 6: is a cross-aectional view of a second embodiment of a cutting nipple according to the invention;

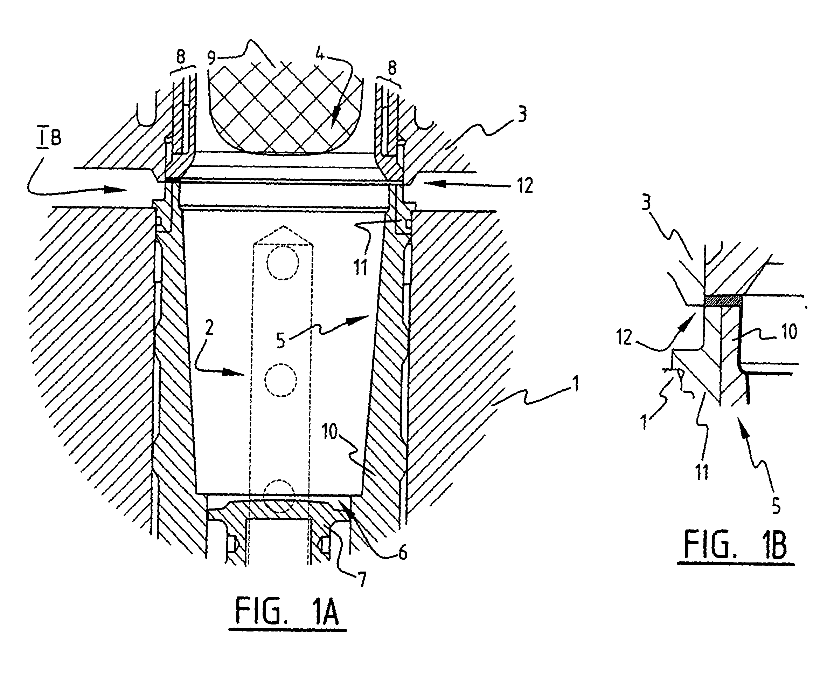

Figure 1A shows a detail of a thermoforming tool. The thermoforming tool comprises a lower mould 1, in which a lower cavity 2 is arranged, and an upper mould 3 in which an upper cavity 4 is arranged. Although only a single combination of cavities is shown in the drawing, a thermoforming tool actually comprises a number of cavities which are usually arranged in a matrix pattern.

Placed in the shown situation in lower cavity 2 is a form cutting nipple 5 in which the invention is embodied. The bottom of the form cutting nipple 5 is provided with an opening 6 in which an ejector 7 is arranged.

Arranged in upper cavity 4, and connecting onto the walls of the upper cavity, is a substantially cylindrical "Niederhalter" or downkeeper 8. Arranged inside "Niederhalter" 8 is a pre-stretcher or plug 9, to which the invention does not apply but which is however essential for the operation of the thermoforming tool in the case of products with a great depth such as tubs or cups.

The operation of the device will now be briefly elucidated, also with reference to figures 1A and 1B.

A layer or sheet of preheated plastic is arranged between upper mould 3 and lower mould 1. Lower mould 1 and upper mould 3 are then moved toward each other, whereafter from the upper cavity 4 the "Niederhalter" 8 clamps the plastic against the upper edge of form cutting nipple 5.

Pre-stretcher 9 then moves downward, wherein it moves the plastic softened by heating into the lower cavity 2 inside form cutting nipple 5. A pre-stretcher 9 is not however necessary in the case of shallow products such as covers. Air is then added from upper cavity 4, which air presses the soft plastic against the inner wall of form cutting nipple 5. This form cutting nipple 5 is cooled, whereby the plastic becomes form-retaining. The plastic between form cutting nipple 5 and "Niederhalter" 8 also becomes form-retaining through cooling of the two components 5, 8.

Form cutting nipple 5 then moves upward, whereby the product present in form cutting nipple 5 is cut loose from the sheet of plastic from which it is formed.

Finally, lower mould 1 and upper mould 3 move apart, the formed products are ejected by ejector 7 and the remaining sheet of plastic is removed.

As already stated in the introduction, cooling of the components, which are in contact with the plastic while the products become form-retaining, is important in making the cycle time as short as possible. In the configuration shown in figure 1A, these are "Niederhalter" 8 and form cutting nipple 5. It is therefore recommended to make these components of material with a high coefficient of heat conduction. This is incompatible with the requirement that form cutting nipple 5 must perform a cutting operation at its upper edge which demands of the material used that it must be hard and resistant to wear.

A conflict also occurs in the case of "Niederhalter" 8. In respect of the movement between this component and upper mould 3, the outer wall of this component must be manufactured from wear-resistant material, while the lower edge, which comes into contact with the hot plastic, must be in communication with the cooling medium at the smallest possible thermal resistance.

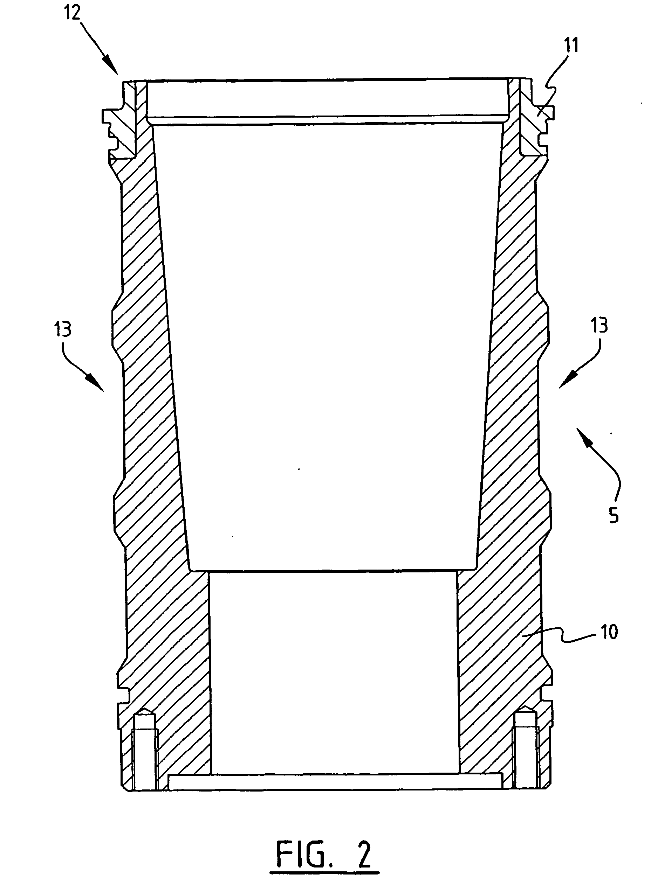

The form cutting nipple 5 shown in figures 1A, 1B and 2 comprises a forming insert 10, the inner wall of which is formed in accordance with the form of the product for manufacturing. Forming insert 10 is manufactured from a material which conducts heat well.

On its upper edge the form cutting nipple 5 is provided with an outer ring 11 which is made from hard, wear-resistant material such as steel or a ceramic material. This outer ring 11 is fixedly connected to forming insert 10 by soldering or other appropriate method. Outer ring 10 is provided with a cutting edge 12 for cutting the product from the sheet of plastic. Cutting edge 12 is herein pressed against the underside of upper mould 3.

In the shown embodiment there is direct cooling, i.e. the heat flow can flow directly from the form cutting nipple 5 to the cooling medium. For this purpose the forming insert 10 is provided on its outside with grooves 13 for guiding cooling medium flowing between forming insert 10 and lower mould 1.

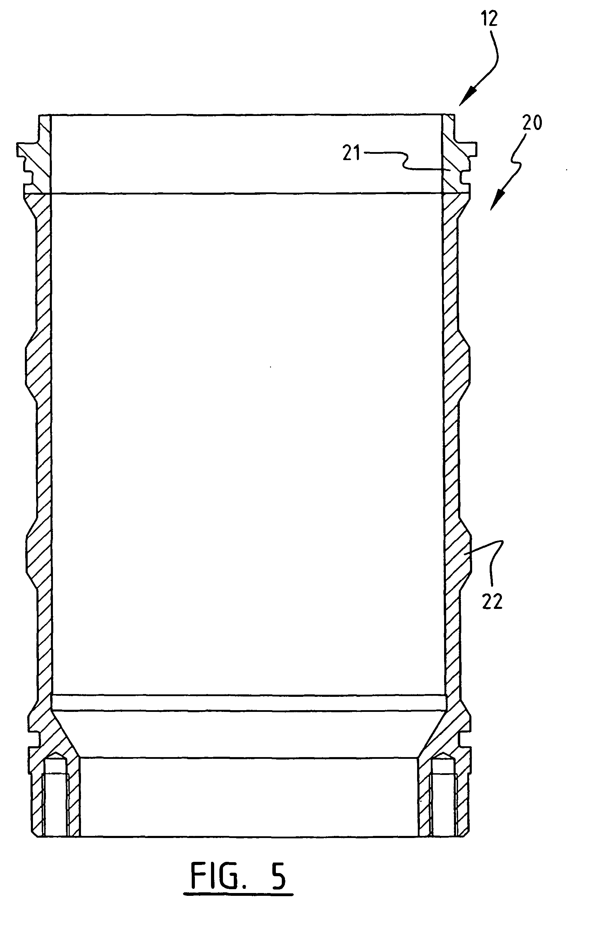

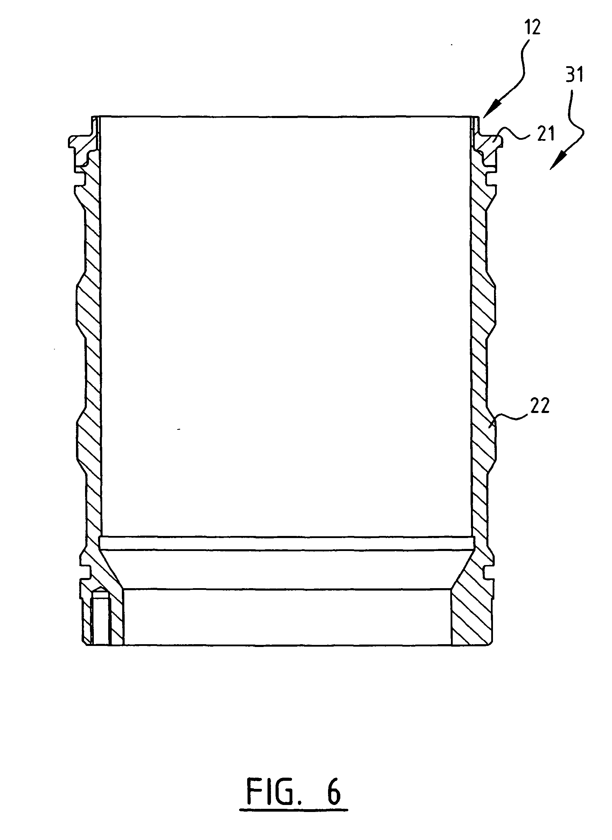

Figures 5 and 6 show two different embodiments of a cutting nipple. These cutting nipples correspond to the form cutting nipple 5 described in the previous embodiments, although here the product-forming element is omitted. This must be placed separately. It can hereby be replaced, so that it provides the option of manufacturing differently formed products.

In the cutting nipple 20 shown in figure 5 the upper ring 21 with cutting edge 12 is placed on the actual sleeve 22. The area available for heat transportation is extremely small here, so it is important to use it as effectively as possible, for instance by soldering the parts to each other.

In figure 6 is shown a cutting nipple 31 which differs from the cutting nipple 20 shown in figure 5 in that the actual sleeve 22 is extended on the inner side of upper ring 21. In other words: upper ring 21 with cutting edge 12 is in contact on its inner surface with the actual sleeve 22. The contact surface between upper ring 21 and sleeve 22 is hereby greatly enlarged. A better transportation of heat is moreover created because the part of sleeve 22 extending adjacently of upper ring 21 forms a thermal bridge. The boundary surface between the actual sleeve 22 and upper 21 is stepped. The boundary surface is hereby further enlarged and the transportation of heat improved. This effect can be enhanced by applying a more deeply stepped boundary surface or even a conical boundary surface. Here too a soldered connection is for instance applied.

The parts shown in figures 2,5,6, are connected to each other in releasable or non-releasable manner. A releasable connection is understood to mean for instance a bolt, rivetted or shrink connection. A non-releasable connection is understood to mean a connection obtained by means of soldering, welding, glueing.

The above described thermoforming tools can be made up of diverse materials, such as tool steel for the first part and a copper alloy for the second part. Other combinations with the above stated materials are also possible, as well as completely different combinations. The point here is to find a combination of materials with the desired properties.

## Claims

1. Thermoforming tool for thermoforming a plastic sheet into a number of products, wherein the thermoforming tool comprises:
- a lower mould (1) in which at least a lower cavity (2) is arranged;
- an upper mould (3) in which at least an upper cavity (4) is arranged, wherein in operation a sheet of plastic is arranged between the upper mould (3) and the lower mould (1), and wherein the lower mould (1) and the upper mould. (3) are movable with respect to each other;
- a number of components which, during the operation of the thermoforming tool, come into contact with the plastic sheet and through which runs a thermal energy flow, wherein
- one of the components is a form cutting nipple (5) arranged in said lower cavity (2) and comprising a product-forming element and a cutting nipple, or
- one of the components is a cutting nipple (31) arranged in said lower cavity (2) and adapted for receiving a forming insert (10),
wherein at least the form cutting nipple (5) or the cutting nipple (31) is formed by a first part (10; 22 ) and a second part (11; 21), said first part (10; 22) being a sleeve and having a low thermal resistance with respect to the second part (11; 21), said second part (11; 21) being an upper ring and having a high wear resistance with respect to said first part (10; 22) and wherein the second part (11; 21) is adapted for cutting formed products out of said plastic sheet; **characterized in that** said first part (10; 22) is in contact with the upper ring on the inner surface as well as on the lower surface of the ring so that the first and second part (10; 22; 11; 21) form a top surface of the relevant component contacting said plastic sheet during use, which surface has an outer edge formed by the second part (11; 21) with said high wear resistance and an inner edge formed by the first (10; 22) part with said low thermal resistance, and **in that** said second part (11; 21) is directly fixedly connected to the first part (10; 22).

2. Thermoforming tool as claimed in claim 1, **characterized in that** the relevant component is a form cutting nipple (5) comprising at least a forming insert (10) and a cutting edge (12), the first part (10) of which is formed by the forming insert and the second part (11) of which is formed by the cutting edge (12).

3. Thermoforming tool as claimed in claims 1 or 2, **characterized in that** the relevant component is a cutting nipple (31) comprising at least a sleeve (22 ) and a cutting element (21), the first part (22) of which is formed by the sleeve (22) and the second part (21) of which is formed by the cutting element (21).

4. Thermoforming tool as claimed in any of the foregoing claims, **characterized in that** the second part (11; 21) is formed by tool steel and that the first part (10; 22) is formed by a copper alloy.

5. Form cutting nipple (5) adapted for placement in a cavity (2) of a thermoforming tool as claimed in any of the claims 1-4, said form cutting nipple (5) comprising a product-forming element and a cutting nipple (11), whereby the form cutting nipple (5) is formed by a first part (10) and a second part (11), said first part (10) being a sleeve and having a low thermal resistance with respect to the second part (11), said second part (11) being an upper ring and having a high wear resistance with respect to said first part (10) and wherein the second part (11) is adapted for cutting formed products out of a plastic sheet;
**characterized in that** said first part (10) is in contact with the upper ring on the inner surface as well as on the lower surface of the ring so that the first and second part (10, 11) form a top surface of the relevant component contacting said plastic sheet during use, which surface has an outer edge formed by the second part (11) with said high wear resistance and an inner edge formed by the first part (10) with said low thermal resistance, and **in that** said second part (11) is directly fixedly connected to the first part (10).

6. Cutting nipple (31) adapted for placement in a cavity (2) of a thermoforming tool as claimed in any of the claims 1-4, wherein the cutting nipple (31) is further adapted for receiving a forming insert (10), said cutting nipple (31) being formed by a first part (22) and a second part (21), said first part (22) being a sleeve and having a low thermal resistance with respect to the second part (21), said second part (21) being an upper ring and having a high wear resistance with respect to said first part (22) and wherein the second part (21) is adapted for cutting formed products out of a plastic sheet; **characterized in that** said first part (22) is in contact with the upper ring on the inner surface as well as on the lower surface of the ring so that the first and second part (21, 22) form a top surface of the relevant component contacting said plastic sheet during use, which surface has an outer edge formed by the second part (21) with said high wear resistance and an inner edge formed by the first part (22) with said low thermal resistance, and **in that** said second part (21) is directly fixedly connected to the first part (22).

## Patentansprüche

1. Warmformwerkzeug zum Warmformen einer Kunststoffplatte in mehrere Gegenstände, wobei das Warmformwerkzeug umfasst:
- eine untere Form (1), in der wenigstens ein unteres Formnest (2) angeordnet ist;
- eine obere Form (3), in der wenigstens ein oberes Formnest (4) angeordnet ist, wobei im Betrieb eine Plastikplatte zwischen der oberen Form (3) und der unteren Form (1) angeordnet ist, und wobei die untere Form (1) und die obere Form (3) in Bezug zueinander bewegbar sind;
- mehrere Komponenten, die während des Betriebs des Warmformwerkzeugs mit der Plastikplatte in Kontakt kommen und durch die ein Wärmeenergiefluss durchfließt, wobei
- eine der Komponenten ein Formschneidewerkzeug (5) ist, das in dem unteren Formnest (2) angeordnet ist und einen den Gegenstand formendes Element umfasst, und ein Schneidewerkzeug, oder
- eine der Komponenten ein Schneidewerkzeug (31) ist, das in dem unteren Formnest (2) angeordnet und zur Aufnahme eines Formungseinsatzes (10) angepasst ist,
wobei wenigstens das Formschneidewerkzeug (5) oder das Schneidewerkzeug (31) durch ein erstes Teil (10; 22) und ein zweites Teil (11; 21) ausgebildet sind, wobei das erste Teil (10; 22) eine Hülse ist und einen geringen Wärmewiderstand bezüglich des zweiten Teils (11; 21) aufweist, wobei das zweite Teil (11; 21) ein oberer Ring ist und einen hohen Verschleißwiderstand bezüglich des ersten Teils (10; 22) aufweist und wobei das zweite Teil (11; 21) ausgebildet ist, um geformte Gegenstände aus der Plastikplatte auszuschneiden;
**dadurch gekennzeichnet, dass** das erste Teil (10; 22) mit dem oberen Ring auf der Innenseite wie auch mit der Unterseite des Rings in Verbindung steht, so dass das erste und zweite Teil (10; 22; 11; 21) eine Oberseite der relevanten Komponente bilden, die mit der Plastikplatte bei Einsatz in Verbindung steht, wobei die Fläche eine Außenkante aufweist, die durch das zweite Teil (11; 21) mit dem hohen Verschleißwiderstand gebildet wird, und eine Innenkante, die durch das erste Teil (10; 22) mit dem geringen Wärmewiderstand gebildet wird, und darin, dass das zweite Teil (11; 21) direkt fest mit dem ersten Teil (10; 22) verbunden ist.

2. Warmformwerkzeug gemäß Anspruch 1, **dadurch gekennzeichnet, dass** die relevante Komponente ein Formschneidewerkzeug (5) ist, das wenigstens einen Formungseinsatz (10) und eine Schneidekante (12) aufweist, wobei das erste Teil (10) davon durch den Formungseinsatz ausgebildet ist und das zweite Teil (11) davon durch die Schneidekante (12) ausgebildet ist.

3. Warmformwerkzeug gemäß Anspruch 1 oder 2,
**dadurch gekennzeichnet, dass** die relevante Komponente ein Formschneidewerkzeug (31) ist, das wenigstens eine Hülse (22) und ein Schneideelement (21) aufweist, wobei das erste Teil (22) davon durch die Hülse (22) ausgebildet ist und das zweite Teil (21) davon durch das Schneideelement (21) ausgebildet ist.

4. Warmformwerkzeug gemäß einem der vorhergehenden Ansprüche,
**dadurch gekennzeichnet, dass** das zweite Teil (11; 21) durch einen Werkzeugstahl ausgebildet ist und dass das erste Teil (10; 22) durch eine Kupferlegierung ausgebildet ist.

5. Formschneidewerkzeug (5), ausgebildet zur Platzierung in einem Formnest (2) eines Warmformwerkzeugs gemäß einem der Ansprüche 1 bis 4, wobei das Formschneidewerkzeug (5) ein einen Gegenstand formendes Element und ein Schneidewerkzeug (11) aufweist, wobei das Formschneidewerkzeug (5) durch ein erstes Teil (10) und ein zweites Teil (11) ausgebildet ist, wobei das erste Teil (10) eine Hülse ist und einen geringen Wärmewiderstand bezüglich des zweiten Teils (11) aufweist, wobei das zweite Teil (11) ein oberer Ring ist und einen hohen Verschleißwiderstand bezüglich des ersten Teils (10) aufweist und wobei das zweite Teil (11) zum Schneiden von geformten Gegenständen aus einer Plastikplatte ausgebildet ist;
**dadurch gekennzeichnet, dass** das erste Teil (10) in Verbindung mit dem oberen Ring auf der Innenseite wie auch auf der Unterseite des Rings steht, so dass das erste und zweite Teil (10; 11) eine Oberseite der relevanten Komponente bilden, die mit der Plastikplatte während des Einsatzes in Verbindung steht, wobei die Fläche eine Außenkante aufweist, die durch das zweite Teil (11) mit dem hohen Verschleißwiderstand ausgebildet ist, und eine Innenkante, die durch das erste Teil (10) mit dem geringen Wärmewiderstand ausgebildet ist, und darin, dass das zweite Teil (11) direkt fest mit dem ersten Teil (10) verbunden ist.

6. Schneidewerkzeug (31), angepasst zur Platzierung in einem Formnest (2) eines Warmformwerkzeugs gemäß einem der Ansprüche 1 bis 4,
wobei das Schneidewerkzeug (31) weiterhin zur Aufnahme eines Formungseinsatzes (10) angepasst ist, wobei das Schneidewerkzeug (31) durch ein erstes Teil (22) und ein zweites Teil (21) ausgebildet ist, wobei das erste Teil (22) eine Hülse ist und einen geringen Wärmewiderstand bezüglich des zweiten Teils (21) aufweist, wobei das zweite Teil (21) ein oberer Ring ist und einen hohen Verschleißwiderstand bezüglich des ersten Teils (22) aufweist und wobei das zweite Teil (21) ausgebildet ist, um geformte Gegenstände aus einer Plastikplatte auszuschneiden;
**dadurch gekennzeichnet, dass** das erste Teil (22) mit dem oberen Ring auf der Innenseite wie auch mit der Unterseite des Rings in Verbindung steht, so dass das erste und zweite Teil (21; 22) eine Oberseite der relevanten Komponente bilden, die mit der Plastikplatte bei Einsatz in Verbindung steht, wobei die Fläche eine Außenkante aufweist, die durch das zweite Teil (21) mit dem hohen Verschleißwiderstand gebildet wird, und eine Innenkante, die vom ersten Teil (22) mit dem geringen Wärmewiderstand gebildet wird und darin, dass das zweite Teil (21) direkt fest mit dem ersten Teil (22) verbunden ist.

## Revendications

1. Outil de thermoformage pour thermoformer une feuille plastique dans un certain nombre de produits, l'outil de thermoformage comprenant :
- un moule inférieur (1) dans lequel au moins une cavité inférieure (2) est agencée ;
- un moule supérieur (3) dans lequel au moins une cavité supérieure (4) est agencée, dans lequel en fonctionnement, une feuille plastique est agencée entre le moule supérieur (3) et le moule inférieur (1), et dans lequel le moule inférieur (1) et le moule supérieur (3) sont mobiles l'un par rapport à l'autre ;
- un certain nombre de composants qui, pendant le fonctionnement de l'outil de thermoformage, entrent en contact avec la feuille plastique et à travers lesquels circule un flux d'énergie thermique, dans lequel
- l'un des composants est un mamelon de découpe de forme (5) agencé dans ladite cavité inférieure (2) et comprenant un élément de formage de produit et un mamelon de découpe, ou
- l'un des composants est un mamelon de découpe (31) agencé dans ladite cavité inférieure (2) et adapté pour recevoir une joue de formage (10),
dans lequel au moins le mamelon de découpe de forme (5) ou le mamelon de découpe (31) est formé par une première partie (10 ; 22) et une seconde partie (11 ; 21), ladite première partie (10 ; 22) étant un manchon et présentant une faible résistance thermique par rapport à la seconde partie (11 ; 21), ladite seconde partie (11 ; 21) étant un anneau supérieur et présentant une résistance à l'usure élevée par rapport à ladite première partie (10 ; 22) et dans lequel la seconde partie (11 ; 21) est adaptée pour découper des produits formés dans ladite feuille en plastique ; **caractérisé en ce que** ladite première partie (10 ; 22) est en contact avec l'anneau supérieur sur la surface interne ainsi que sur la surface inférieure de l'anneau de sorte que les première et seconde parties (10 ; 22 ; 11 ; 21) forment une surface supérieure du composant d'intérêt en contact avec ladite feuille plastique en cours d'utilisation, laquelle surface présente un bord externe formé par la seconde partie (11 ; 21) avec ladite résistance à l'usure élevée et un bord interne formé par la première partie (10 ; 22) avec ladite faible résistance thermique, et **en ce que** ladite seconde partie (11 ; 21) est directement raccordée fixement à la première partie (10 ; 22).

2. Outil de thermoformage selon la revendication 1, **caractérisé en ce que** le composant d'intérêt est un mamelon de découpe de forme (5) comprenant au moins une joue de mise en forme (10) et un bord de coupe (12), dont la première partie (10) est formée par la joue de formage et la seconde partie (11) est formée par le bord de coupe (12).

3. Outil de thermoformage selon la revendication 1 ou 2, **caractérisé en ce que** le composant d'intérêt est un mamelon de découpe (31) comprenant au moins un manchon (22) et un élément de découpe (21), dont la première partie (22) est formée par le manchon (22) et la seconde partie (21) est formée par l'élément de découpe (21).

4. Outil de thermoformage selon l'une quelconque des revendications précédentes, **caractérisé en ce que** la seconde partie (11 ; 21) est formée par de l'acier d'outillage et **en ce que** la première partie (10 ; 22) est formée par un alliage de cuivre.

5. Mamelon de découpe de forme (5) adapté pour une mise en place dans une cavité (2) d'un outil de thermoformage selon l'une quelconque des revendications 1 à 4, ledit mamelon de découpe de forme (5) comprenant un élément de mise en forme de produit et un mamelon de découpe (11), moyennant quoi le mamelon de découpe de forme (5) est formé par une première partie (10) et une seconde partie (11), ladite première partie (10) étant un manchon et présentant une faible résistance thermique par rapport à la seconde partie (11), ladite seconde partie (11) étant un anneau supérieur et présentant une résistance à l'usure élevée par rapport à ladite première partie (10) et dans lequel la seconde partie (11) est adaptée pour découper des produits formés dans une feuille plastique ;
**caractérisé en ce que** ladite première partie (10) est en contact avec l'anneau supérieur sur la surface interne ainsi que sur la surface inférieure de l'anneau de sorte que les première et seconde parties (10, 11) forment une surface supérieure du composant d'intérêt en contact avec ladite feuille plastique en cours d'utilisation, laquelle surface a un bord externe formé par la seconde partie (11) avec ladite résistance à l'usure élevée et un bord interne formé par la première partie (10) avec ladite faible résistance thermique, et **en ce que** ladite seconde partie (11) est directement raccordée fixement à la première partie (10).

6. Mamelon de découpe (31) adapté pour une mise en place dans une cavité (2) d'un outil de thermoformage selon l'une quelconque des revendications 1 à 4, dans lequel le mamelon de découpe (31) est en outre adapté pour recevoir une joue de mise en forme (10), ledit mamelon de découpe (31) étant formé par une première partie (22) et une seconde partie (21), ladite première partie (22) étant un manchon et présentant une faible résistance thermique par rapport à la seconde partie (21), ladite seconde partie (21) étant un anneau supérieur et présentant une résistance à l'usure élevée par rapport à ladite première partie (22) et dans lequel la seconde partie (21) est adaptée pour découper des produits formés dans une feuille plastique ; **caractérisé en ce que** ladite première partie (22) est en contact avec l'anneau supérieur sur la surface interne ainsi que sur la surface inférieure de l'anneau de sorte que les première et seconde parties (21, 22) forment une surface supérieure du composant d'intérêt en contact avec ladite feuille en plastique en cours d'utilisation, laquelle surface comporte un bord externe formé par la seconde partie (21) avec ladite résistance à l'usure élevée et un bord interne formé par la première partie (22) avec ladite faible résistance thermique, et **en ce que** ladite seconde partie (21) est directement raccordée fixement à la première partie (22).
